(19) Europäisches Patentamt
European Patent Office
Office européen des brevets

(11) Numéro de publication : **0 433 106 B1**

(12) # FASCICULE DE BREVET EUROPEEN

(45) Date de publication du fascicule du brevet : **06.10.93 Bulletin 93/40**

(21) Numéro de dépôt : **90403134.1**

(22) Date de dépôt : **06.11.90**

(51) Int. Cl.$^5$ : **C08F 214/22,** C08F 214/26, C09D 127/16, C09D 127/18, // (C08F214/22, 214:26, 216:14), (C08F214/26, 214:22, 216:14)

(54) **Copolymère réticulable fluoré son procédé de fabrication et son application dans les vernis et peintures.**

(30) Priorité : **16.11.89 FR 8915029**

(43) Date de publication de la demande : **19.06.91 Bulletin 91/25**

(45) Mention de la délivrance du brevet : **06.10.93 Bulletin 93/40**

(84) Etats contractants désignés : **AT BE CH DE DK ES FR GB GR IT LI LU NL SE**

(56) Documents cités : **GB-A- 2 163 756**

(73) Titulaire : **ELF ATOCHEM S.A.**
**4 & 8, Cours Michelet La Défense 10**
**F-92800 Puteaux (FR)**

(72) Inventeur : **Kappler, Patrick**
**20, Allée St Simon**
**F-69130 Ecully (FR)**
Inventeur : **Perillon, Jean-Luc**
**18 Lot Bois Taillefer**
**F-27300 Bernay (FR)**

(74) Mandataire : **Foiret, Claude et al**
**ELF ATOCHEM S.A. Département Propriété Industrielle La Défense 10 - Cedex 42**
**F-92091 Paris-La-Défense (FR)**



Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un copolymère durcissable fluoré de fluorure de vinylidène ($C_2H_2F_2$) et de tétrafluoroéthylène ($C_2F_4$), d'un éther allylique hydroxylé et d'un éther vinylique. Ce copolymère soluble dans les solvants organiques est particulièrement recommandé pour la fabrication de peintures et vernis.

Les polymères fluorés sont connus pour leurs bonnes propriétés mécaniques et leur excellente résistance aux produits chimiques et aux intempéries. Toutefois, leur insolubilité dans les solvants classiques les rend inutilisables pour certaines applications dont par exemple celle de résine pour peintures et vernis où leurs propriétés sont recherchées pour la fabrication de revêtements de bonne résistance et d'entretien facile.

Afin de profiter des propriétés des polymères fluorés tout en évitant leurs inconvénients, des moyens ont été recherchés pour les rendre solubles dans les solvants organiques classiques. Pour ce faire, il est connu de diminuer la cristallinité des polymères fluorés par copolymérisation de monomères éthyléniquement insaturés dont un au moins est fluoré.

En outre, pour utiliser de tels copolymères, il est souhaitable, pour certaines applications, en particulier pour leur emploi dans la fabrication de peintures et vernis, de leur conserver un degré suffisant de rigidité et de les rendre durcissables par incorporation dans leur structure de groupes fonctionnels.

De tels copolymères réticulables fluorés sont décrits dans les FR 2 597 873 et 2 569 703. Ces produits sont obtenus par copolymérisation de chlorotrifluoroéthylène, d'ester acide gras et d'allylglycidyléther hydroxylé ou éthoxylé. Ces copolymères peuvent éventuellement contenir moins de 20 % d'un autre comonomère non fluoré. Si ces copolymères contiennent plus de 20 % du comonomère précédent, ils perdent de leur solubilité dans les solvants et de leur transparence. En outre, l'introduction de fluor par l'intermédiaire du seul $C_2F_3Cl$ amène également l'atome de chlore qui n'est pas désirable en grande quantité pour les propriétés optiques et de résistance à la corrosion.

Dans le JP 59-174657/84 est également décrit un copolymère réticulable durcissable à base de fluorure de vinylidène, de tétrafluoroéthylène, de chlorotrifluoroéthylène, d'un ester vinylidique et d'un agent d'hydroxylation. Ce copolymère contenant de 5 à 80 % de groupements de chlorotrifluoroéthylène et à base d'ester vinylique présente l'inconvénient de fournir après hydrolyse une solution de copolymère assez fortement colorée qui nuit à la transparence des vernis réalisés ultérieurement à partir de ce produit.

La présente invention a pour objet un copolymère fluoré facilement durcissable à chaud en présence éventuellement d'un agent durcissant. Ce copolymère en solution dans un solvant adapté à cette application peut être utilisé en tant que peinture ou vernis pour former des revêtements durs, stables et transparents en absence de pigments et possédant une excellente adhérence sur les métaux, le verre, le bois, le ciment, les matières plastiques, etc...

Le copolymère réticulable selon l'invention contenant les restes de copolymérisation d'un monomère fluoré et d'un éther allylique hydroxylé et d'un éther vinylique est caractérisé en ce que :

- les restes de monomère fluoré proviennent de l'association de fluorure de vinylidène et de tétrafluoroéthylène,
- les restes de l'éther allylique proviennent d'un des composés de formule :

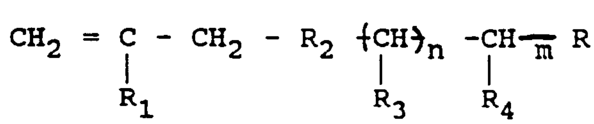

R étant : $CH_2OH$
$R_1$ étant : H ou $CH_3$
-$R_2$ étant:O-(X)p,

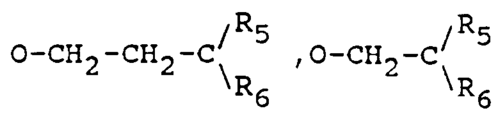

avec "p" un nombre choisi de 0 à 3
et X = $(CH_2)$q-O avec "q" un nombre choisi de 1 à 3
$R_5$ et $R_6$ identiques ou différents étant :
$CH_2OH, CH_2-CH_2-OH, CH_3, C_2H_5$

$R_3$ et $R_4$ étant H ou OH, mais non simultanément H et "n" et "m", identiques ou différents étant des nombres choisis de 0 à 2.

- les restes de l'éther vinylique proviennent d'un des composés de formule :

$$CH_2 = CH - O - R_7$$

$R_7$ étant un radical alkyl linéaire ou ramifié contenant de 2 à 8 et de préférence de 2 à 4 atomes de carbone, ou un radical cyclique.

L'association pour 100 moles de l'ensemble des deux monomères fluorés est de :

- 75 à 25 moles de fluorure de vinylidène et de
- 75 à 25 moles de tétrafluoroéthylène.

Le copolymère réticulable fluoré selon l'invention est caractérisé en ce qu'il comprend les restes des monomères provenant de :

- 75 à 25 moles et mieux de 70 à 50 moles de fluorure de vinylidène,
- 75 à 25 moles et mieux de 50 à 30 moles de tétrafluoroéthylène,
- 4 à 15 moles et mieux de 5 à 10 moles de l'éther allylique précédent pour 100 moles de l'ensemble des deux monomères fluorés,
- 3 à 35 moles et mieux de 5 à 20 moles de l'éther vinylique précédent pour 100 moles de l'ensemble des deux monomères fluorés.

Parmi les éthers allyliques préférés, peuvent être cités les composés de formule :

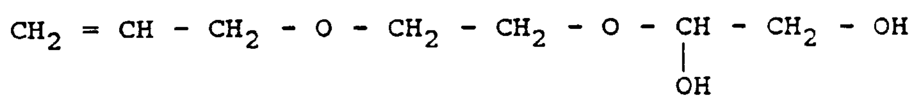

$CH_2 = CH - CH_2 - O - CH_2 - CH_2 - O - CH_2 - CH_2 - OH$

$CH_2 = CH\text{-}CH_2\text{-}O\text{-}CH_2\text{-}CH_2\text{-}O\text{-}CH_2\text{-}CH_2\text{-}O\text{-}CH_2\text{-}CH_2\text{-}OH$

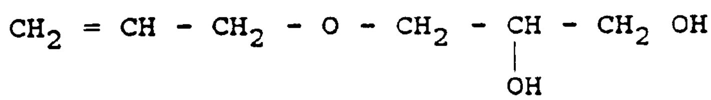

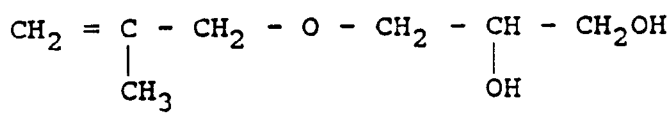

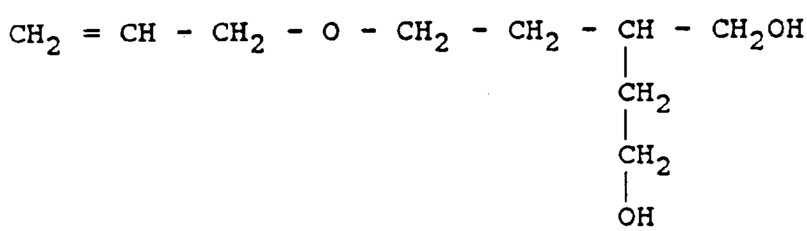

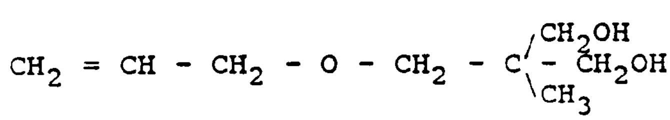

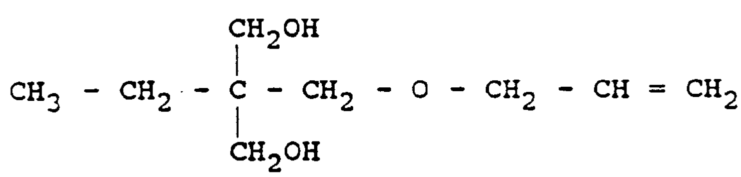

Parmi les alkylvinyléthers préférés, peuvent être cités : l'éthylvinyléther, le butylvinyléther, l'isobutylvinyléther, l'isopropylvinyléther, le propylvinyléther, l'éthyl 2-hexyle vinyléther. Parmi les éthers vinyliques cycliques le cyclohexylvinyléther peut être cité. Un mélange de deux éthers vinyliques peut aussi être utilisé.

Afin de pouvoir utiliser ces copolymères dans une composition liquide de revêtement, telle que peinture ou vernis, il est recommandé que la viscosité inhérente du copolymère dissous dans la diméthylformamide (DMF) à 25°C à une concentration de 1 g/dl soit comprise dans les valeurs de 0,06 à 0,9 dl/g.

Le copolymère selon l'invention est habituellement obtenu selon le procédé connu de polymérisation en solution. Le procédé consiste à copolymériser les monomères en milieu solvant en présence d'un initiateur organosoluble, à une température comprise entre environ 30 et 120°C et de préférence entre 40 et 80°C sous une pression d'environ 10 à 80 bars et de préférence entre 15 et 40 bars.

Selon l'invention, le copolymère réticulable est obtenu par copolymérisation de fluorure de vinylidène et de tétrafluoroéthylène, d'éther allylique et d'éther vinylique tels que définis précédemment. Pour 100 moles de monomères fluorés polymérisés sont utilisées :

- 75 à 25 moles de fluorure de vinylidène,
- 75 à 25 moles de tétrafluoroéthylène auxquelles sont associées de l'éther allylique et de l'éther vinylique tels que déjà définis.

Afin d'obtenir un copolymère réticulable possédant les meilleurs propriétés, on associe habituellement de 4 à 15 moles d'éther allylique et 3 à 35 moles d'éther vinylique tels que définis pour 100 moles de l'ensemble des deux monomères fluorés.

Selon un mode de copolymérisation préféré, le solvant est chauffé à la température de réaction choisie dans un réacteur agité préalablement dégazé. Un mélange de monomère fluoré ainsi qu'une fraction initiale d'éther allylique et d'éther vinylique sont introduits dans le réacteur.

La quantité de mélange de monomères à introduire pour atteindre la pression de réaction choisie dépend des conditions de solubilité des monomères fluorés dans le solvant choisi. Le rapport pondéral monomères/solvant est en général compris entre 0,1 et 1.

Lorsque la pression de réaction et la température de réaction sont atteintes, on introduit dans le réacteur l'initiateur de polymérisation. La formation de polymère se traduit par une baisse de pression que l'on compense par l'ajout de mélange de monomères fluorés.

On peut ajouter un mélange de monomères fluorés de composition molaire identique à celle que l'on a introduite au départ. On peut également tenir compte des réactivités propres de chaque monomère et ajuster la composition du mélange rajouté au cours de la polymérisation pour faire un copolymère homogène en composition.

Les composés allylique et vinyléther peuvent également être ajoutés en cours de polymérisation. Ils peuvent également être ajoutés en mélange ou séparément, en association ou non aux ajouts de monomères fluorés.

Les dérivés allylique et vinyléther sont ajoutés, de telle sorte que la composition du mélange de monomères fluorés et de dérivés allylique et vinyléther reste constante pendant toute la duré de la polymérisation.

L'ajout du mélange de monomères pour maintenir la pression est poursuivi suffisamment longtemps pour atteindre un extrait sec de l'ordre de 10 à 60 %, de préférence de 15 à 40 %.

Les réactifs résiduaires volatils peuvent être éliminés par dégazage.

La solution finale est extraite du réacteur et peut être conservée telle quelle. Elle peut encore être concentrée immédiatement ou ultérieurement de façon à obtenir la quantité d'extrait sec choisie pour l'utilisation du copolymère.

Les solvants choisis pour la réaction de copolymérisation doivent permettre de solubiliser le mélange des monomères tout en restant inertes vis à vis des autres composants réactionnels. Ils sont choisis de préférence parmi les acétates et les alcools. Parmi les acétates préférés, l'acétate de butyle, d'isobutyle et d'éthyle sont particulièrement retenus. Parmi les alcools préférés, sont cités le méthanol et le tertiobutanol.

Il n'est pas exclu d'associer au milieu réactionnel de copolymérisation un tiers monomère fluoré exempt de chlore dans sa molécule, ce peut être par exemple de l'hexafluoropropène. La quantité de tiers monomère fluoré ne peut cependant être supérieure à 15 moles pour 100 moles de l'ensemble des deux monomères : fluorure de vinylidène et tétrafluoroéthylène.

Les initiateurs de copolymérisation sont connus en eux-mêmes, les plus courants étant choisis parmi les initiateurs de polymérisation radicalaire comme les perdicarbonates, les perpivalates et les composés azo, tels que le percarbonate de diisopropyle ou de dicyclohexyle, le perpivalate de tertiobutyle ou de tertioamyle, l'azobisisobutyronitrile et l'azo-bis-2,2-diméthylvaléronitrile.

Compte tenu de l'effet d'agent de transfert des solvants et des initiateurs cités, les masses moléculaires des polymères obtenus sont relativement faibles. Les masses moléculaires en nombre ($\overline{Mn}$) des copolymères réticulables obtenus sont, de préférence, compris entre 1000 et 10 000 ; elles sont mesurées par la technique de chromatographie d'exclusion stérique (GPC) après dissolution dans la diméthylformamide, à température ambiante. Ces mesures GPC sont réalisées sur un dispositif à 3 colonnes WATERS microstyragel $10^2$ nm, $10^3$

nm, $10^4$ nm, calibré par des étalons polyéthylène glycol. La détection est assurée par un réfractomètre.

Lorsque le copolymère réticulable selon l'invention doit être utilisé comme base dans la formulation pour peinture et vernis, il peut éventuellement être utilisé dans son milieu solvant réactionnel initial. Il peut également être plus ou moins concentré et remis en solution dans un solvant mieux adapté au type de peinture ou vernis souhaité. Tel quel, le copolymère en milieu solvant donne une solution transparente. A cette solution, peuvent être ajoutés les additifs souhaités tels que pigments, charges, solvants, diluants, agents modificateurs de rhéologie, agents d'étalement, agents mouillants, antimousses, agents stabilisants contre la chaleur ou la lumière, promoteurs d'adhésion, corésine ou agent de durcissement par réticulation.

Parmi les pigments on peut citer le dioxyde de titane, les oxydes de fer, l'oxyde de chrome vert, le bleu de cobalt, le jaune de chrome, le noir de carbone ou des pigments inhibiteurs de corrosion tels que le phosphate de zinc, le triphosphate d'aluminium.

Parmi les solvants ou diluants on peut citer les esters, les cétones, les éthers de propylèneglycol, les composés aromatiques.

Parmi les corésines on peut citer les résines acryliques, les polyesters, les polyéthers, les époxydes.

Parmi les agents de durcissement par réticulation on peut citer les mélamines-formol éventuellement éthérifiées, les isocyanates ou polyisocyanates libres ou bloqués, les acides ou polyacides organiques ou leurs anhydrides.

La température de réticulation de ces copolymères est généralement comprise entre -20 et +270°C et dépend essentiellement de la nature du durcisseur.

L'aptitude à la réticulation des copolymères fluorés fonctionnels est jugée au moyen d'un test de résistance à un solvant.

Un coton imbibé de méthyléthylcétone (MEC) est frotté dans un mouvement de va et vient sur le revêtement jusqu'à apparition du support.

Un nombre d'aller-retours supérieur à 50 montre une bonne réticulation, un nombre d'aller-retours supérieur à 100 montre une excellente réticulation.

Les vernis ou une peinture à base de ces copolymères peuvent être appliqués par projection pneumatique ou électrostatique, au trempé, à la brosse, ou encore au rouleau. Ces copolymères peuvent être appliqués sur métaux, bois, verre, matières plastiques ou même d'anciens revêtements.

Les exemples suivants illustrent l'invention sans toutefois la limiter.

## EXEMPLE 1

Dans un autoclave de 3,3 l. muni d'une agitation efficace on introduit après désaération par le vide 2 l. de tertiobutanol, 23 g. de butylvinyléther et 40 g. de 3 allyloxy 1-2 propane diol. La température de l'autoclave est ensuite portée à 70°C. A cette température on ajoute 374 g. d'un mélange de $VF_2/C_2F_4$ dans les proportions molaires 80/20. On ajoute ensuite 10 g. de perpivalate de tertiobutyle en solution dans du tertiobutanol.

Pour maintenir la pression à 20 bars on ajoute un mélange $VF_2/C_2F_4$ dans les proportions molaires 65/35. Chaque fois que l'on a introduit 97 g. de mélange de monomères fluorés $VF_2/C_2F_4$ dans les proportions 65/35 on introduit dans l'autoclave 8,5 g. de butylvinyléther et 15 g. de 3 allyloxy 1-2 propane diol. 7,5 g. de perpivalate de tertiobutyle sont ajoutés en cours de réaction, après 1h30 et 3 h de polymérisation. Après 6h10 de polymérisation on refroidit l'autoclave à température ambiante et on dégaze les monomères résiduaires. Le solvant de polymérisation est ensuite distillé sous vide poussé.

On recueille après ce traitement 705 g. de copolymère $VF_2/C_2F_4$/butylvinyléther/3 allyloxy 1-2 propane diol.

Le rapport $VF_2/C_2F_4$ dans le copolymère est de 64/36. Pour 100 motifs de $VF_2/C_2F_4$ il y a 8,5 motifs de butylvinyléther et 7,6 motifs allyloxy propane diol.

La viscosité inhérente dans la DMF à 25°C à une concentration de 1 g/dl est de 0,224 dl/g ; $\overline{Mn}$ GPC = 6350.

## EXEMPLE 2

Dans un autoclave de 3,3 l. muni d'une agitation efficace on introduit après désaération par le vide 1,75 l. de tertiobutanol et 0,25 l. de méthanol,, 58 g. de butylvinyléther et 19 g. de 3 allyloxy 1-2 propane diol. La température de l'autoclave est ensuite portée à 70°C. A cette température on ajoute 353 g. d'un mélange de $VF_2/C_2F_4$ dans les proportions molaires 50/50. On ajoute ensuite 5 g. de perpivalate de tertiobutyle en solution dans un mélange de solvant tertiobutanol et méthanol dans les mêmes proportions que celui de départ.

Pour maintenir la pression à 20 bars on ajoute un mélange $VF_2/C_2F_4$ dans les proportions molaires 50/50. Chaque fois que l'on a introduit 106 g. de mélange de monomères fluorés $VF_2/C_2F_4$ dans les proportions 50/50 on introduit dans l'autoclave 22 g. de butylvinyléther et 14 g. de 3 allyloxy 1-2 propane diol. 2,5 g. de perpivalate

de tertiobutyle sont ajoutés en cours de réaction, après 1h30 et 3 h de polymérisation. Après 4h35 de polymérisation on refroidit l'autoclave à température ambiante et on dégaze les monomères résiduaires. Le solvant de polymérisation est ensuite distillé sous vide poussé.

On recueille après ce traitement 740 g. de copolymère $VF_2/C_2F_4$/butylvinyléther/3 allyloxy 1-2 propane diol.

Le rapport molaire $VF_2/C_2F_4$ dans le copolymère est de 51/49. Pour 100 motifs fluorés de $VF_2/C_2F_4$ il y a 26 motifs de butylvinyléther et 7 motifs allyloxy propane diol.

La viscosité inhérente dans la DMF à 25°C à une concentration de 1 g/dl est de 0,132 dl/g.

## EXEMPLE 3

Dans un autoclave de 3,3 l. muni d'une agitation efficace on introduit après désaération par le vide 1,75 l. de tertiobutanol et 0,25 l. de méthanol, 46 g. de butylvinyléther et 40 g. de 3 allyloxy 1-2 propane diol. La température de l'autoclave est ensuite portée à 70°C. A cette température on ajoute 350 g. d'un mélange de $VF_2/C_2F_4$ dans les proportions molaires 80/20. On ajoute ensuite 10 g. de perpivalate de tertiobutyle en solution dans un mélange de solvant tertiobutanol et méthanol dans les mêmes proportions que celui de départ.

Pour maintenir la pression à 20 bars on ajoute un mélange $VF_2/C_2F_4$ dans les proportions molaires 65/35. Chaque fois que l'on a introduit 100 g. de mélange de monomères fluorés $VF_2/C_2F_4$ dans les proportions 65/35 on introduit dans l'autoclave 22 g. de butylvinyléther et 17 g. de 3 allyloxy 1-2 propane diol. 7,5 g. de perpivalate de tertiobutyle sont ajoutés en cours de réaction, après 1h30 et 3 h de polymérisation. Après 5h45 de polymérisation on refroidit l'autoclave à température ambiante et on dégaze les monomères résiduaires. Le solvant de polymérisation est ensuite distillé sous vide poussé.

On recueille après ce traitement 556 g. de copolymère $VF_2/C_2F_4$/butylvinyléther/3 allyloxy 1-2 propane diol.

Le rapport molaire $VF_2/C_2F_4$ dans le copolymère est de 65/35. Pour 100 motifs fluorés de $VF_2/C_2F_4$ il y a 26 motifs de butylvinyléther et 8,5 motifs allyloxy propane diol.

La viscosité inhérente dans la DMF à 25°C à une concentration de 1 g/dl est de 0,11 dl/g.

## EXEMPLE 4

Dans un autoclave de 3,3 l. muni d'une agitation efficace on introduit après désaération par le vide 1,5 l. de tertiobutanol et 0,5 l. de méthanol, 23 g. de butylvinyléther et 40 g. de 3 allyloxy 1-2 propane diol. La température de l'autoclave est ensuite portée à 70°C. A cette température on ajoute 270 g. d'un mélange de $VF_2/C_2F_4$ dans les proportions molaires 80/20. On ajoute ensuite 10 g. de perpivalate de tertiobutyle en solution dans un mélange de solvant tertiobutanol et méthanol dans les mêmes proportions que celui de départ.

Pour maintenir la pression à 20 bars on ajoute un mélange $VF_2/C_2F_4$ dans les proportions molaires 65/35. Chaque fois que l'on a introduit 97 g. de mélange de monomères fluorés $VF_2/C_2F_4$ dans les proportions 65/35 on introduit dans l'autoclave 8,5 g. de butylvinyléther et 15 g. de 3 allyloxy 1-2 propane diol. 10 g. de perpivalate de tertiobutyle sont ajoutés en cours de réaction, après 1h,30 et 3 h de polymérisation. Après 4h45 de polymérisation on refroidit l'autoclave à température ambiante et on dégaze les monomères résiduaires. Le solvant de polymérisation est ensuite distillé sous vide poussé.

On recueille après ce traitement 713 g. de copolymère $VF_2/C_2F_4$/butylvinyléther/3 allyloxy 1-2 propane diol.

Le rapport molaire $VF_2/C_2F_4$ dans le copolymère est de 63/37. Pour 100 motifs fluorés de $VF_2/C_2F_4$ il y a 7,5 motifs de butylvinyléther et 7,5 motifs allyloxy propane diol.

La viscosité inhérente dans la DMF à 25°C à une concentration de 1 g/dl est de 0,08 dl/g ; $\overline{Mn}$ (GPC) = 1950.

## EXEMPLE 5

Dans un autoclave de 3,3 l. muni d'une agitation efficace on introduit après désaération par le vide 1,75 l. de tertiobutanol et 0,25 l. de méthanol, 58 g. de butylvinyléther et 19 g. de 3 allyloxy 1-2 propane diol. La température de l'autoclave est ensuite portée à 70°C. A cette température on ajoute 360 g. d'un mélange de $VF_2/C_2F_4/C_3F_6$ dans les proportions molaires 45/45/13. On ajoute ensuite 5 g. de perpivalate de tertiobutyle en solution dans un mélange de solvant tertiobutanol et méthanol dans les mêmes proportions que celui de départ.

Pour maintenir la pression à 20 bars on ajoute un mélange $VF_2/C_2F_4/C_3F_6$ dans les proportions molaires 48/48/4. Chaque fois que l'on a introduit 106 g. de mélange de monomères fluorés $VF_2/C_2F_4/C_3F_6$ dans les proportions 47/47/6 on introduit dans l'autoclave 22 g. de butylvinyléther et 14 g. de 3 allyloxy 1-2 propane diol. 3 g. de perpivalate de tertiobutyle sont ajoutés en cours de réaction, après 1h30 et 3 h de polymérisation. Après 4h50 de polymérisation on refroidit l'autoclave à température ambiante et on dégaze les monomères

résiduaires. Le solvant de polymérisation est ensuite distillé sous vide poussé.

On recueille après ce traitement 750 g. de copolymère $VF_2/C_2F_4/C_3F_6$/butylvinyléther/3 allyloxy 1-2 propane diol.

Le rapport molaire $VF_2/C_2F_4/C_3F_6$ dans le copolymère est de 47/48/5. Pour 100 motifs fluorés de $VF_2/C_2F_4$ il y a 24 motifs de butylvinyléther et 6,6 motifs allyloxy propane diol.

La viscosité inhérente dans la DMF à 25°C à une concentration de 1 g/dl est de 0,12 dl/g.

EXEMPLE 6

Dans un autoclave de 3,3 l. muni d'une agitation efficace on introduit après désaération par le vide 2 l. de tertiobutanol et 17 g. d'éthylvinyléther et 40 g. de 3 allyloxy 1-2 propane diol. La température de l'autoclave est ensuite portée à 70°C. A cette température on ajoute 370 g. d'un mélange de $VF_2/C_2F_4$ dans les proportions molaires 80/20. On ajoute ensuite 10 g. de perpivalate de tertiobutyle en solution dans du tertiobutanol.

Pour maintenir la pression à 20 bars on ajoute un mélange $VF_2/C_2F_4$ dans les proportions molaires 65/35. Chaque fois que l'on a introduit 97 g. de mélange de monomères fluorés $VF_2/C_2F_4$ dans les proportions 65/35 on introduit dans l'autoclave 6,1 g. d'éthylvinyléther et 15 g. de 3 allyloxy 1-2 propane diol. 7 g. de perpivalate de tertiobutyle sont ajoutés en cours de réaction, après 1h30 et 3 h de polymérisation. Après 6h de polymérisation on refroidit l'autoclave à température ambiante et on dégaze les monomères résiduaires. Le solvant de polymérisation est ensuite distillé sous vide poussé.

On recueille après ce traitement 670 g. de copolymère $VF_2/C_2F_4$/éthylvinyléther/3 allyloxy 1-2 propane diol.

Le rapport molaire $VF_2/C_2F_4$ dans le copolymère est de 63/37. Pour 100 motifs fluorés de $VF_2/C_2F_4$ il y a 8 motifs d'éthylvinyléther et 7,2 motifs allyloxy propane diol.

La viscosité inhérente dans la DMF à 25°C à une concentration de 1 g/dl est de 0,22 dl/g.

EXEMPLE 7

Dans un autoclave de 3,3 l. muni d'une agitation efficace on introduit après désaération par le vide 1,75 l. de tertiobutanol et 0,25 l. de méthanol, 46 g. de butylvinyléther et 25 g. de triméthylolpropanemonoallyléther. La température de l'autoclave est ensuite portée à 70°C. A cette température on ajoute 350 g. d'un mélange de $VF_2/C_2F_4$ dans les proportions molaires 80/20. On ajoute ensuite 10 g. de perpivalate de tertiobutyle en solution dans un mélange de solvant tertiobutanol et méthanol dans les mêmes proportions que celui de départ.

Pour maintenir la pression à 20 bars on ajoute un mélange $VF_2/C_2F_4$ dans les proportions molaires 65/35. Chaque fois que l'on a introduit 100 g. de mélange de monomères fluorés $VF_2/C_2F_4$ dans les proportions 65/35 on introduit dans l'autoclave 17 g. de butylvinyléther et 11,4 g. de triméthylolpropanemonoallyléther. 7 g. de perpivalate de tertiobutyle sont ajoutés en cours de réaction, après 1h30 et 3 h de polymérisation. Après 5h40 de polymérisation on refroidit l'autoclave à température ambiante et on dégaze les monomères résiduaires. Le solvant de polymérisation est ensuite distillé sous vide poussé.

On recueille après ce traitement 550 g. de copolymère $VF_2/C_2F_4$ /butylvinyléther/triméthylolpropanemonoallyléther.

Le rapport molaire $VF_2/C_2F_4$ dans le copolymère est de 63/37. Pour 100 motifs fluorés de $VF_2/C_2F_4$ il y a 17 motifs de butylvinyléther et 9 motifs de triméthylolpropanemonoallyléther.

La viscosité inhérente dans la DMF à 25°C à une concentration de 1 g/dl est de 0,105 dl/g.

EXEMPLE 8

Dans un autoclave de 3,3 l. muni d'une agitation efficace on introduit après désaération par le vide 2 l. de tertiobutanol, 17 g. de butylvinyléther, 50 g. de cyclohexylvinyléther et 40 g. de 3 allyloxy 1-2 propane diol. La température de l'autoclave est ensuite portée à 70°C. A cette température on ajoute 370 g. d'un mélange de $VF_2/C_2F_4$ dans les proportions molaires 80/20. On ajoute ensuite 10 g. de perpivalate de tertiobutyle en solution dans du tertiobutanol.

Pour maintenir la pression à 20 bars on ajoute un mélange $VF_2/C_2F_4$ dans les proportions molaires 65/35. Chaque fois que l'on a introduit 100 g. de mélange de monomères fluorés $VF_2/C_2F_4$ dans les proportions 65/35 on introduit dans l'autoclave 18,5 g. de cyclohexylvinyléther, 6,3 g. de butylvinyléther et 15 g. de 3 allyloxy 1-2 propane diol. 6 g. de perpivalate de tertiobutyle sont. ajoutés en cours de réaction, après 1h30 et 3 h de polymérisation. Après 6h30 de polymérisation on refroidit l'autoclave à température ambiante et on dégaze les monomères résiduaires. Le solvant de polymérisation est ensuite distillé sous vide poussé.

On recueille après ce traitement 650 g. de copolymère $VF_2/C_2F_4$/butylvinyléther/cyclohexylvinyléther/3 al-

lyloxy 1-2 propane diol.

Le rapport molaire $VF_2/C_2F_4$ dans le copolymère est de 65/35. Pour 100 motifs fluorés de $VF_2/C_2F_4$ il y a 7,5 motifs de butylvinyléther, 17 motifs cyclohexylvinyléther et 7 motifs allyloxy propane diol.

La viscosité inhérente dans la DMF à 25°C à une concentration de 1 g/dl est de 0,25 dl/g.

EXEMPLE 9 COMPARATIF

Dans un autoclave de 3,3 l. muni d'une agitation efficace on introduit après désaération par le vide 1,35 l. de tertiobutanol et 0,45 l. de méthanol, 180 g. de butylvinyléther et 13,5 g. de 3 allyloxy 1-2 propane diol. La température de l'autoclave est ensuite portée à 70°C. A cette température on ajoute 320 g. d'un mélange de $VF_2/C_2F_4$ dans les proportions molaires 10/90. On ajoute ensuite 2 g. de perpivalate de tertiobutyle en solution dans un mélange de solvant tertiobutanol et méthanol dans les mêmes proportions que celui de départ.

Pour maintenir la pression à 20 bars on ajoute un mélange $VF_2/C_2F_4$ dans les proportions molaires 10/90. Chaque fois que l'on a introduit 115 g. de mélange de monomères fluorés $VF_2/C_2F_4$ dans les proportions 10/90 on introduit dans l'autoclave 74 g. de butylvinyléther et 14 g. de 3 allyloxy 1-2 propane diol. 0,5 g. de perpivalate de tertiobutyle sont ajoutés en cours de réaction, après 1h30 de polymérisation. Après 3 h de polymérisation on refroidit l'autoclave à température ambiante et on dégaze les monomères résiduaires. Le solvant de polymérisation est ensuite distillé sous vide poussé.

On recueille après ce traitement 920 g. de copolymère $VF_2/C_2F_4$/butylvinyléther/3 allyloxy 1-2 propane diol.

Le rapport molaire $VF_2/C_2F_4$ dans le copolymère est de 9/91. Pour 100 motifs fluorés de $VF_2/C_2F_4$ il y a 91 motifs de butylvinyléther et 6,5 motifs allyloxy propane diol.

La viscosité inhérente dans la DMF à 25°C à une concentration de 1 g/dl est de 0,223 dl/g.

EXEMPLE 10

Le copolymère de l'exemple 1 est solubilisé dans l'acétate de butyle de manière à obtenir une solution à 50 % en poids d'extrait sec.

On prépare un vernis en mélangeant par simple agitation 160 g. de la solution de copolymère fluoré et 22 g. d'une solution de mélamine formol éthérifiée en solution à 90 % en poids dans l'isobutanol.

Le mélange est appliqué à la barre de 100 μm sur une éprouvette d'aluminium chromaté, qui est étuvée pendant 30 minutes à 130°C pour donner un film sec d'épaisseur 23 μm. Le film obtenu subit le test d'aller-retours à la MEC et ne présente pas d'altération visible après 100 aller-retours. Le film présente une dureté crayon superficielle de F selon ASTMD3363-74 et un brillant spéculaire de 70 % mesuré selon ASTMD523-85.

EXEMPLE 11

Le copolymère de l'exemple 1 est solubilisé dans l'acétate de butyle de manière à obtenir une solution à 50 % en poids d'extrait sec.

On prépare un vernis en mélangeant par simple agitation 120 g. de la solution de copolymère fluoré et 18,9 g. d'un trimère de l'hexaméthylènediisocyanate et 1,3 g. de dilaurate de dibutylétain. On dilue avec de l'acétate de butyle jusqu'à obtenir une viscosité mesurée à 20°C à la coupe DIN n° 4 de 22 secondes.

Le mélange est appliqué au pistolet pneumatique sur une plaque d'acier galvanisé phosphaté.

Le film, sec au toucher après 4 heures, est laissé durcir pendant 15 jours à température ambiante pour donner un film de 20 μm.

Ce film subit sans altération 100 aller-retours à la MEC. Il présente une dureté crayon de F mesuré selon ASTMD3363-74 et un brillant spéculaire de 60 % mesuré selon ASTMD523-85.

EXEMPLE 12

Le copolymère de l'exemple 1 est solubilisé dans l'acétate de butyle de manière à obtenir une solution à 50 % en poids d'extrait sec.

On prépare une pâte pigmentaire en mélangeant 210 g. de solution de copolymère fluoré et 210 g. de dioxyde de titane.

Le mélange est effectué dans un broyeur à billes pendant 30 minutes à 1500 t/min.

A partir de cette pâte pigmentaire on prépare une peinture blanche. On mélange 210 g. de pàte pigmentaire blanche, 30 g. de solution de copolymère fluoré, 15 g. d'une solution à 90 % en poids d'une résine de mélamine formol éthérifiée et 0,8 g. d'acide paratoluène sulfonique.

La peinture blanche est appliquée à la barre de 125 µm sur une plaque d'aluminium chromaté, qui est étuvée 30 minutes à 130°C pour donner un film d'épaisseur sec de 25 µm.

La peinture obtenue subit le test d'aller-retours à la MEC et ne présente pas d'altération visible après 100 aller-retours. Elle présente une dureté superficielle de F selon ASTMD3363-74 et un brillant spéculaire de 55 % mesuré selon ASTMD523-85.

EXEMPLE 13

Le copolymère de l'exemple 2 est solubilisé dans l'acétate de butyle de manière à obtenir une solution à 50 % en poids d'extrait sec.

On prépare un vernis en mélangeant par simple agitation 160 g. de la solution de copolymère fluoré et22 g. d'une solution de mélamine formol éthérifiée en solution à 90 % dans l'isobutanol.

Le mélange est appliqué à la barre de 100 µm sur une éprouvette d'aluminium chromaté qui est étuvée pendant 30 minutes à 130°C pour donner un film sec d'épaisseur 23 µm.

Le film obtenu subit le test d'aller-retours à la MEC et ne présente pas d'altération visible après 100 aller-retours.

Le film présente une dureté crayon superficielle de H selon ASTMD3363-74 et un brillant spéculaire de 70 % mesuré selon ASTMD523-85.

EXEMPLE 14

Le copolymère de l'exemple 2 est solubilisé dans l'acétate de butyle de manière à obtenir une solution à 50 % en poids d'extrait sec.

On prépare une pâte pigmentaire en mélangeant :

190 g. de solution de copolymère fluoré
17,6 g. de dioxyde de titane
63 g. de bleu de cobalt
9,4 g. de noir de carbone

Le mélange est effectué dans un broyeur à billes pendant 45 minutes à 1500 t/min.

On prépare une peinture bleue à partir de cete pâte. On mélange 140 g. de pâte pigmentaire, 28,6 g. de solution de copolymère fluoré, 16 g. d'un trimère de l'hexaméthylènediisocyanate et 2 g. de dilaurate de dibutylétain.

La peinture bleue est appliquée à la barre de 125 µm sur une plaque d'aluminium chromaté préalablement revêtue d'un primaire anticorrosion à base d'époxy puis laissée durcir.

Le film, sec au toucher après 4 heures, présente après 15 jours à température ambiante une dureté crayon superficielle de 2H selon ASTMD3363-74.

La peinture bleue obtenue subit le test d'aller-retours à la MEC et ne présente pas d'alteration visible après 100 aller-retours. Elle présente un brillant spéculaire de 40 % mesuré selon ASTMD523-85.

EXEMPLE 15

Le copolymère de l'exemple 3 est solubilisé dans l'acétate de butyle de manière à obtenir une solution à 50 % en poids d'extrait sec.

On prépare un vernis en mélangeant par simple agitation 140 g. de la solution de copolymère fluoré et 25 g. d'un trimère de l'hexaméthylènediisocyanate et 1,7 g. de dilaurate de dibutylétain.

On dilue avec de l'acétate de butyle jusqu'à obtenir une viscosité à la coupe DIN n° 4 de 22 secondes mesurée à 20°C.

Le mélange est appliqué au pistolet pneumatique sur une plaque d'acier galvanisé phosphaté. Le film, sec au toucher après 4 heures est laissé durcir pendant 15 jours à température ambiante pour donner un film d'épaisseur sec de 20 µm.

Ce film subit sans altération 100 aller-retours à la MEC. Il présente une dureté crayon de HB, mesuré selon ASTMD3363-74 et un brillant spéculaire de 70 % mesuré selon ASTMD523-85.

EXEMPLE 16

Le copolymère de l'exemple 3 est solubilisé dans l'acétate de butyle de manière à obtenir une solution à 50 % d'extrait sec.

On prépare une pâte pigmentaire en mélangeant 160 g. de solution de copolymère fluoré et 160 g. de dioxyde de titane.

Le mélange est effectué dans un broyeur à billes pendant 30 minutes à 1500 t/min.

On prépare la peinture blanche de la manière suivante :

On mélange 160 g. de pâte pigmentaire blanche, 22,8 g. de solution de copolymère fluoré, 11 g. d'une solution à 90 % d'un résine de mélamine formol éthérifiée et 0,5 g. d'acide paratoluène sulfonique.

La peinture blanche est appliquée à la barre de 125 µm sur une plaque d'aluminium qui est étuvée 30 minutes à 130°C pour donner un film d'épaisseur sec de 25 µm.

La peinture obtenue subit le test d'aller-retours à la MEC. Elle ne présente pas d'altération visible après 100 aller-retours. Elle présente une dureté crayon superficielle de 2H selon ASTMD3363-74 et un brillant spéculaire de 75 % mesuré selon ASTM D523-85.

EXEMPLE 17

Le copolymère de l'exemple 4 est solubilisé dans l'acétate de butyle de manière à obtenir une solution à 50 % en poids d'extrait sec.

On prépare un vernis en mélangeant par simple agitation 160 g. de la solution de copolymère fluoré et 22 g. d'une solution de mélamine formol éthérifiée en solution à 90 % en poids dans l'isobutanol.

Le mélange est appliqué à la barre de 100 µm sur une éprouvette d'aluminium chromaté qui est étuvée pendant 30 minutes à 130°C pour donner un film sec d'épaisseur 23 µm.

Le film obtenu subit le test d'aller-retours à la MEC et ne présente pas d'altération visible après 100 aller-retours. Le film présente une dureté crayon superficielle de 2H selon ASTMD3363-74 et un brillant spéculaire de 75 % mesuré selon ASTMD523-85.

EXEMPLE 18

Le copolymère de l'exemple 4 est solubilisé dans l'acétate de butyle de manière à obtenir une solution à 50 % en poids d'extrait sec.

On prépare une pâte pigmentaire en mélangeant :

171 g. de solution de copolymère fluoré
15,8 g. de dioxyde de titane
56,7 g. de bleu de cobalt
8,5 g. de noir de carbone.

Le mélange est effectué dans un broyeur à billes pendant 30 minutes à 1500 t/min.

On prépare une peinture bleue à partir de cette pâte . On mélange 126 g. de pâte pigmentaire, 32 g. d'une solution de copolymère fluoré, 21,3 g. d'un trimère de l'hexaméthylènediisocyanate et 0,9 g. de dilaurate de dibutylétain.

La peinture bleue est appliquée à la barre de 125 µm sur une plaque d'aluminium chromaté, préalablement revêtue d'un primaire anticorrosion à base d'époxy, puis laissée durcir.

Le film, sec au toucher après 4 heures, présente après 15 jours à température ambiante une dureté crayon superficielle de 3H selon ASTMD3363-74. La peinture bleue obtenue subit le test d'aller-retours à la MEC, elle ne présente pas d'altération visible après 100 aller-retours. Elle présente un brillant spéculaire de 43 % mesuré selon ASTMD523-85.

EXEMPLE 19

Le copolymère de l'exemple 9 est solubilisé dans l'acétate de butyle de manière à obtenir une solution à 50 % en poids d'extrait sec.

On prépare un vernis en mélangeant par simple agitation 140 g. de la solution de copolymère fluoré et 22 g. d'un trimère de l'hexaméthylènediisocyanate et 1,4 g. de dilaurate de dibutylétain.

On dilue avec de l'acétate de butyle jusqu'à obtenir une viscosité à la coupe DIN n°4 de 22 secondes mesurée à 20°C.

Le mélange est appliqué au pistolet pneumatique sur une plaque d'acier galvanisé phosphaté et laissé durcir pendant 15 jours à température ambiante pour donner un film d'épaisseur sec de 20 µm.

Le film reste légèrement collant au toucher. On lui fait subir le test de résistance à la MEC. Après 20 aller-retours on voit apparaître le support.

Il ne présente qu'une dureté crayon de 5B mesuré selon ASTMD3363-74 ce qui correspond à une réticulation imparfaite. De plus le film présente un aspect laiteux très prononcé.

EXEMPLE 20

Le copolymère de l'exemple 9 est solubilisé dans l'acétate de butyle de manière à obtenir une solution à 50 % en poids d'extrait sec.

On prépare une pâte pigmentaire en mélangeant 200 g. de solution de copolymère fluoré et 200 g. de dioxyde de titane.

Le mélange est effectué dans un broyeur à billes pendant 30 minutes à 1500 t/min.

On prépare des peintures blanches à partir de cette pâte. On mélange 140 g. de pâte pigmentaire blanche, 20 g. d'une solution de copolymère fluoré, 0,5 d'acide paratoluène sulfonique. A quatre de ces mélanges précédents on ajoute :

a) 10 g. d'une solution à 90 % d'une résine de mélamine formol éthérifiée

b) 12,5 g. de la même solution de résine mélamine

c) 16,7 g. de la même solution de résine mélamine

d) 21,4 g. de la même solution de résine mélamine

Les quatre peintures blanches sont appliquées à la barre de 125 μm sur une plaque d'aluminium chromaté puis étuvées 30 minutes à 130°C pour réaliser des films d'épaisseur à sec de 25 μm.

Les peintures obtenues subissent le test de résistance à la méthyléthylcétone,et de dureté crayon selon ASTM3363-74 avec lès résultats suivants :

| | a | b | c | d |
|---|---|---|---|---|
| aller-retours<br>dureté crayon | 34<br>4B | 49<br>3B | 28<br>4B | 14<br>5B |

Les résultats montrent une réticulation imparfaite de la peinture. Par ailleurs les films restent très légèrement collants au toucher.

EXEMPLE 21

Le copolymère de l'exemple 5 est solubilisé dans l'acétate de butyle de manière à obtenir une solution à 50 % en poids d'extrait sec.

On prépare un vernis en mélangeant par simple agitation 120 g. de la solution de copolymère fluoré et 14,9 g. d'un trimère de l'hexaméthylènediisocyanate et 1,3 g. de dilaurate de dibutylétain. On dilue avec de l'acétate de butyle jusqu'à obtenir une viscosité à la coupe DIN n° 4 de 22 secondes mesurée à 20°C.

Le mélange est appliqué au pistolet pneumatique sur une plaque d'acier galvanisé phosphaté. Le film, sec au toucher après 4 heures est laissé durcir pendant 15 jours à température ambiante pour donner un film d'épaisseur sec de 20 μm.

Ce film subit sans altération 100 aller-retours à la MEC. Il présente une dureté crayon de HB mesuré selon ASTMD3363-74 et un brillant spéculaire de 40 % mesuré selon ASTMD523-85.

EXEMPLE 22

Le copolymère de l'exemple 5 est solubilisé dans l'acétate de butyle de manière à obtenir une solution à 50 % en poids d'extrait sec.

On prépare une pâte pigmentaire en mélangeant 130 g. de solution de copolymère fluoré et 130 g. de dioxyde de titane.

Le mélange est effectué dans un broyeur à billes pendant 30 minutes à 1500 t/min.

On prépare une peinture blanche à partir de cette pâte. On mélange 140 g. de pâte pigmentaire blanche, 20 g. d'une solution de copolymère fluoré, 10 g. d'une solution à 90 % en poids d'une résine de mélamine formol éthérifiée et 0,8 g. d'acide paratoluène sulfonique.

La peinture blanche est appliquée à la barre de 125 μm sur une plaque d' aluminium chromaté puis étuvée 30 minutes à 130°C pour donner un film d'épaisseur sec de 25 μm..

La peinture obtenue subit le test d'aller-retours à la MEC, elle ne présente pas d'altération visible après

100 aller-retours. Elle présente une dureté superficielle de F selon ASTMD3363-74 et un brillant spéculaire de 45 % mesuré selon ASTMD523-85.

EXEMPLE 23

Le copolymère de l'exemple 6 est solubilisé dans l'acétate de butyle de manière à obtenir une solution à 50 % en poids d'extrait sec.

On prépare un vernis en mélangeant par simple agitation 160 g. de la solution de copolymère fluoré et 22 g. d'une solution de mélamine formol éthérifiée en solution à 90% dans l'isobutanol.

Le mélange est appliqué à la barre de 100 µm sur une éprouvette d'aluminium chromaté puis étuvé pendant 30 minutes à 130°C pour donner un film sec d'épaisseur 23 µm.

Le film obtenu subit le test d'aller-retours à la MEC, il ne présente pas d'altération visible après 100 aller-retours. Le film présente une dureté crayon superficielle de F mesuré selon ASTMD3363-74 et un brillant spéculaire de 38 % mesuré selon ASTMD523-85.

EXEMPLE 24

Le copolymère de l'exemple 7 est solubilisé dans l'acétate de butyle de manière à obtenir une solution à 50 % en poids d'extrait sec.

On prépare un vernis en mélangeant par simple agitation 140 g. de la solution de copolymère fluoré et 12 g. d'un trimère de l'hexaméthylènediisocyanate et 1 g. de dilaurate de dibutylétain. On dilue avec de l'acétate de butyle jusqu'à obtenir une viscosité à la coupe DIN n° 4 de 22 secondes mesurée à 20°.

Le mélange est appliqué au pistolet pneumatique sur une plaque d'acier galvanisé phosphaté. Le film, sec au toucher après 4 heures est laissé durcir pendant 15 jours à température ambiante pour donner un film d'épaisseur sec de 20 µm.

Ce film subit sans altération 100 aller-retours à la MEC. Il présente une dureté crayon de F mesuré selon ASTMD3363-74 et un brillant spéculaire de 45 % mesuré selon ASTMD523-85.

EXEMPLE 25

Le copolymère de l'exemple 8 est solubilisé dans l'acétate de butyle de manière à obtenir une solution à 50 % en poids d'extrait sec.

On prépare un vernis en mélangeant par simple agitation 160 g. de la solution de copolymère fluoré et 22 g. d'une solution de mélamine formol éthérifiée en solution à 90 % dans l'isobutanol.

Le mélange est appliqué à la barre de 100 µm sur une éprouvette d'aluminium chromaté puis étuvé pendant 30 minutes à 130°C pour donner un film sec d'épaisseur 23 µm.

Le film obtenu subit le test d'aller-retours à la MEC, il ne présente pas d'altération visible après 100 aller-retours. Le film présente une dureté crayon superficielle de H mesuré selon ASTMD3363-74 et un brillant spéculaire de 58 % mesuré selon ASTMD523-85.

## Revendications

**1.** Copolymère réticulable contenant les restes de copolymérisation d'un monomère fluoré, d'un éther allylique hydroxylé et d'un éther vinylique caractérisé en ce que :

a) les restes de monomère fluoré proviennent de l'association pour 100 moles des deux monomères fluorés de 75 à 25 moles de fluorure de vinylidène, de 75 à 25 moles de tétrafluoroéthylène et éventuellement d'au plus 15 moles d'un tiers monomère fluoré exempt de chlore dans sa molécule pour 100 moles de l'ensemble des deux monomères : fluorure de vinylidène et tétrafluoroéthylène,

b) les restes de l'éther allylique proviennent de 4 à 15 moles pour 100 moles de l'ensemble des deux monomères fluorés d'un des composés de la formule :

$$CH_2 = \underset{\substack{|\\R_1}}{C} - CH_2 - R_2 - (\underset{\substack{|\\R_3}}{CH})_n - (\underset{\substack{|\\R_4}}{CH})_m - R$$

R étant : $CH_2OH$
$R_1$ étant : H ou $CH_3$
$R_2$ étant:O-(X)p,

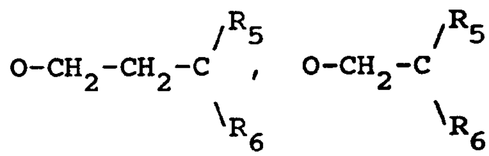

avec "p" un nombre choisi de 0 à 3
et X étant $(CH_2)_q$-O avec "q" un nombre choisi de 1 à 3
$R_5$ et $R_6$, identiques ou différents, étant $CH_2OH$, $CH_2$-$CH_2OH$, $CH_3$, $C_2H_5$
$R_3$ et $R_4$, étant H ou OH, mais non simultanément H
et "n" et "m", identiques ou différents étant des nombres choisis de 0 à 2.

c) les restes de l'éther vinylique proviennent de 3 à 35 moles pour 100 moles de l'ensemble des deux monomères fluorés d'un des composés de la formule :

$$CH_2 = CH - O - R_7$$

$R_7$ étant un radical alkyl, linéaire ou ramifié, contenant de 2 à 8 atomes de carbone ou un radical cyclique.

**2.** Copolymère réticulable selon la revendication 1 caractérisé en ce que sa viscosité intrinsèque en solution dans la diméthylformamide à 25°C en concentration de 1 g/dl est comprise dans les valeurs de 0,06 à 0,9 dl/g.

**3.** Copolymère réticulable selon l'une des revendications 1 ou 2 caractérisé en ce que le tiers monomère est l'hexafluoropropène.

**4.** Copolymère réticulable selon l'une des revendications 1 à 3 caractérisé en ce qu'il se présente en solution dans un solvant organique.

**5.** Solution selon la revendication 4 caractérisée en ce que le solvant est un alcool ou un acétate.

**6.** Procédé de fabrication de copolymère réticulable à base de monomère fluoré et d'éther allylique hydroxylé caractérisé en ce qu'on copolymérise :

- du fluorure de vinylidène,
- du tétrafluoroéthylène,
- un éther allylique et un éther vinylique, tels que définis dans la revendication 1.

**7.** Procédé selon la revendication 6 caractérisé en ce que pour 100 moles de monomères fluorés :

- 75 à 25 moles représentent le fluorure de vinylidène,
- 75 à 25 moles représentent le tétrafluoroéthylène.

**8.** Procédé selon l'une des revendications 6 ou 7 caractérisé en ce que pour 100 moles de l'ensemble des deux monomères fluorés sont utilisés :

- 75 à 25 moles représentant le fluorure de vinylidène pour
- 75 à 25 moles représentant le tétrafluoroéthylène.
- 4 à 15 moles d'éther allylique tel que défini dans la revendication 1.
- 3 à 35 moles d'éther vinylique tel que défini dans la revendication 1.

**9.** Procédé selon l'une des revendications 6 à 8 caractérisé en ce que la copolymérisation s'effectue en solution dans un solvant.

**10.** Procédé selon la revendication 9 caractérisé en ce que le solvant est un alcool ou un acétate.

**11.** Procédé selon l'une des revendications 6 à 10 caractérisé en ce que la température de copolymérisation est comprise entre 30 et 120°C.

**12.** Procédé selon l'une des revendications 6 à 11 caractérisé en ce que la pression de copolymérisation est comprise entre 10 et 80 bars.

**13.** Peinture ou vernis obtenu à partir des copolymères réticulables des revendications 1 à 5.

**Patentansprüche**

**1.** Ein vernetzbares Copolymer, das die Reste der Copolymerisation eines fluorierten Monomers, eines hydroxilierten Allylethers und eines Vinylethers enthält, dadurch gekennzeichnet, daß:

a) die fluorierten Monomerreste aus der Umsetzung von 75 bis 25 Mol des Fluorvinylidens, von 75 bis 25 Mol des Tetrafluorethylens und eventuell von mehr als 15 Mol eines dritten fluorierten Monomers ohne Chlor in seinem Molekül, bezogen auf 100 Mol der beiden Monomere: Fluorvinyliden und Tetrafluorethylen stammen,

b) die Allyletherreste aus 4 bis 15 Mol für 100 Mol der beiden fluorierten Monomere einer der Verbindungen der folgenden Formel

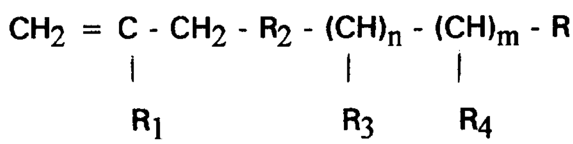

stammen,

- mit R= $CH_2OH$,
- mit $R_1$ = H oder $CH_3$,
- mit $R_2$ =O-(X)p,

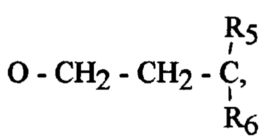

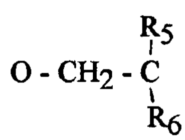

wobei "p" eine Zahl zwischen 0 und 3 ist und X gleich $(CH_2)_q$ - O mit "q" zwischen 1 und 3 ist.

mit $R_5$ und $R_6$ (gleich oder unterschiedlich) gleich $CH_2OH$, $CH_2$-$CH_2OH$, $CH_3$, $C_2H_5$ ist.

- mit $R_3$ und $R_4$ gleich H oder OH, jedoch nicht gleichzeitig H,

wobei "n" und "m" gleiche oder verschiedene Zahlen zwischen 0 und 2 sind.

c) die Vinyletherreste aus 3 bis 35 Mol für 100 Mol der Gesamtmenge der fluorierten Monomeren einer der Verbindungen der Formel $CH_2$ = CH - O - $R_7$ entsprechen,

wobei $R_7$ ein lineares oder verzweigtes Alkylradikal mit 2 bis 8 C-Atomen oder ein ringförmiges Radikal ist,

stammen.

**2.** Ein vernetzbares Copolymer nach Anspruch 1, dadurch gekennzeichnet, daß seine Grenzviskosität in einer Lösung von 1g/100 ml Dimethylformamid bei 25 °C zwischen 0,06 bis 0,9 100 ml/g liegt.

**3.** Ein vernetzbares Copolymer nach einem der Ansprüche 1 oder 2, dadurch gekennzeichnet, daß das dritte Monomer Hexafluorpropen ist.

**4.** Ein vernetzbares Copolymer nach einem der Ansprüche 1 bis 3, dadurch gekennzeichnet, daß es in einem organischen Lösungsmittel gelöst vorliegt.

**5.** Lösung nach Anspruch 4, dadurch gekennzeichnet, daß das Lösungsmittel ein Alkohol oder Acetat ist.

**6.** Herstellungsverfahren für ein vernetzbares Copolymer auf der Basis fluorierter Monomere und hydroxilierter Allylether, dadurch gekennzeichnet, daß man

- Fluorvinyliden,
- Tetrafluorethylen,
- einen Allylether und einen Vinylether, wie in Anspruch 1 definiert, copolymerisiert.

7. Verfahren nach Anspruch 6, dadurch gekennzeichnet, daß für 100 Mol fluorierter Monomere
   - 75 bis 25 Mol Fluorvinyliden
   - 75 bis 25 Mol Tetrafluorethylen eingesetzt werden.

8. Verfahren nach einem der Ansprüche 6 oder 7, dadurch gekennzeichnet, daß für 100 Mol der Gesamtmenge der beiden fluorierten Monomere
   - 75 bis 25 Mol Fluorvinyliden
   - 75 bis 25 Mol Tetrafluorethylen
   - 4 bis 15 Mol Vinylether wie in Anspruch 1 definiert,
   - 3 bis 35 Mol Vinylether wie in Anspruch 1 definiert,
   verwendet werden.

9. Verfahren nach einem der Ansprüche 6 bis 8, dadurch gekennzeichnet, daß die Copolymerisation in Lösung in einem Lösungsmittel stattfindet.

10. Verfahren nach Anspruch 9, dadurch gekennzeichnet, daß das Lösungsmittel ein Alkohol oder ein Acetat ist.

11. Verfahren nach einem der Ansprüche 6 bis 10, dadurch gekennzeichnet, daß die Temperatur der Copolymerisation zwischen 30 und 120 °C liegt.

12. Verfahren nach einem der Ansprüche 6 bis 11, dadurch gekennzeichnet, daß der Druck bei der Copolymerisation zwischen 10 und 80 Bar liegt.

13. Farben oder Lacke, die ausgehend von den vernetzbaren Copolymeren nach den Ansprüchen 1 bis 5 erhalten werden.

## Claims

1. Crosslinkable copolymer containing the residues from copolymerisation of a fluorinated monomer, of a hydroxylated allyl ether and of a vinyl ether, characterised in that:
   a) the fluorinated monomer residues originate from the combination, per 100 moles of the two fluorinated monomers, of 75 to 25 moles of vinylidene fluoride, of 75 to 25 moles of tetrafluoroethylene and optionally of not more than 15 moles of a third fluorinated monomer free from chlorine in its molecule per 100 moles of the combination of the two monomers: vinylidene fluoride and tetrafluoroethylene,
   b) the allyl ether residues originate from 4 to 15 moles per 100 moles of the combination of the two fluorinated monomers of one of the compounds of formula:

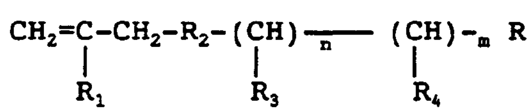

R being: $CH_2OH$
$R_1$ being: H or $CH_3$
$R_2$ being:O-$(X)_p$,

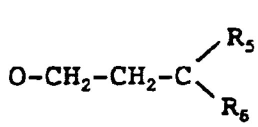 , 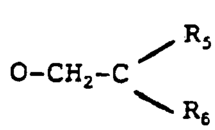

with "p" a number chosen from 0 to 3 and X being $(CH_2)_q$-O with "q" a number chosen from 1 to 3

$R_5$ and $R_6$, which are identical or different, being $CH_2OH$, $CH_2$-$CH_2OH$, $CH_3$, $C_2H_5$
$R_3$ and $R_4$ being H or OH but not simultaneously H
and "n" and "m", which are identical or different, being numbers chosen from 0 to 2,

c) the vinyl ether residues originate from 3 to 35 moles per 100 moles of the combination of the two fluorinated monomers of one of the compounds of formula:

$$CH_2=CH-O-R_7$$

$R_7$ being a linear or branched alkyl radical containing from 2 to 8 carbon atoms or a cyclic radical.

**2.** Crosslinkable copolymer according to Claim 1, characterised in that its intrinsic viscosity in solution in dimethylformamide at 25°C at a concentration of 1 g/dl is included within the values from 0.06 to 0.9 dl/g.

**3.** Crosslinkable copolymer according to either of Claims 1 and 2, characterised in that the third monomer is hexafluoropropene.

**4.** Crosslinkable copolymer according to one of Claims 1 to 3, characterised in that it is in solution in an organic solvent.

**5.** Solution according to Claim 4, characterised in that the solvent is an alcohol or an acetate.

**6.** Process for the manufacture of crosslinkable copolymer based on fluorinated monomer and hydroxylated allyl ether, characterised in that:

- vinylidene fluoride,
- tetrafluoroethylene,
- an allyl ether and a vinyl ether, as defined in Claim 1,

are copolymerised.

**7.** Process according to Claim 6, characterised in that, per 100 moles of fluorinated monomers:

- 75 to 25 moles represent vinylidene fluoride,
- 75 to 25 moles represent tetrafluoroethylene.

**8.** Process according to either of Claims 6 and 7, characterised in that, per 100 moles of the combination of the two fluorinated monomers:

- 75 to 25 moles representing vinylidene fluoride per
- 75 to 25 moles representing tetrafluoroethylene,
- 4 to 15 moles of allyl ether as defined in Claim 1,
- 3 to 35 moles of vinyl ether as defined in Claim 1

are employed.

**9.** Process according to one of Claims 6 to 8, characterised in that the copolymerisation takes place in solution in a solvent.

**10.** Process according to Claim 9, characterised in that the solvent is an alcohol or an acetate.

**11.** Process according to one of Claims 6 to 10, characterised in that the copolymerisation temperature is between 30 and 120°C.

**12.** Process according to one of Claims 6 to 11, characterised in that the copolymerisation pressure is between 10 and 80 bars.

**13.** Paint or varnish obtained from the crosslinkable copolymers of Claims 1 to 5.